(19) Europäisches Patentamt
European Patent Office
Office européen des brevets

(11) **EP 1 988 116 B1**

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(51) Int Cl.:
***C08G 77/26*** *(2006.01)*

(21) Anmeldenummer: **08154916.4**

(22) Anmeldetag: **22.04.2008**

(54) **Verfahren zur Herstellung von Aminoalkylpolysiloxanen**

Process for preparing aminoalkylpolysiloxanes

Procédé de synthèse d'organopolysiloxanes à terminaisons amine

(84) Benannte Vertragsstaaten:
**BE DE FR GB NL**

(30) Priorität: **02.05.2007 DE 102007020569**

(43) Veröffentlichungstag der Anmeldung:
**05.11.2008 Patentblatt 2008/45**

(73) Patentinhaber: **Wacker Chemie AG
81737 München (DE)**

(72) Erfinder:
• **Herzig, Christian
83329, Waging (DE)**

• **Schildbach, Daniel
84524, Neuötting (DE)**

(74) Vertreter: **Deffner-Lehner, Maria et al
Wacker Chemie AG
Zentralbereich Patente, Marken und Lizenzen
Hanns-Seidel-Platz 4
81737 München (DE)**

(56) Entgegenhaltungen:
**EP-A- 0 655 475    EP-A- 0 915 119
EP-A- 1 096 059    EP-A- 1 580 215
WO-A- 02/10254**

**Beschreibung**

Die Erfindung betrifft ein Verfahren zur Herstellung von Aminoalkylpolysiloxanen.

Die üblicherweise praktizierten Verfahren zur Herstellung von Aminoalkylfunktionellen Siloxanen gehen von Aminoalkylsilanen aus, die in OH- oder Me-gestoppte Polysiloxane einequilibriert werden. In einzelnen Ausführungen unterscheiden sich diese Methoden meist in Art und Menge der verwendeten Katalysatoren, die zur Einstellung eines Equilibriums notwendig sind, in der Art zu deren Neutralisation bei Reaktionsende und ggf. in der Verwendung von diversen Carbinolen zur Endstopperung und Stabilisierung der erhaltenen Polymere. Bei Aminoalkylpolydimethylsiloxanen bedeutet die Equilibrierung gleichzeitig die Bildung niedermolekularer flüchtiger Nebenprodukte, die in den meisten Anwendungen unerwünscht sind und daher in einem gesonderten physikalischen Prozess entfernt werden müssen. Dies bedeutet erhöhten Herstellaufwand meist auch verbunden mit Ausbeuteverlusten und ist gerade bei Commodities ökonomisch unattraktiv. Aus diesem Grund sind technische Optimierungsmaßnahmen auf diesem Gebiet darauf fokussiert, den Anteil flüchtiger Nebenprodukte zu minimieren.

Wie in EP 382 366 A beschrieben, kann dies durch Verwendung bestimmter Hydroxid-Katalysatoren erreicht werden, die nur die Kondensation linearer Diorganopolysiloxane mit endständigen Silanolgruppen katalysieren. Die linearen Diorganopolysiloxane können auch funktionelle Gruppen, wie Aminoalkylgruppen, aufweisen. Bei diesem Verfahren müssen als "Rohstoffe" bereits OH-gestopperte Aminoalkylsiloxane eingesetzt werden, wobei nicht beschrieben ist, wie diese verlustarm hergestellt werden können.

US 3,890,269 (korrespondierende DE 2 339 761 A) beschreibt ein Verfahren zur Herstellung von Aminoalkylsiloxanen, bei dem cyclische Siloxane mit Aminoalkylsilanen oder deren Hydrolysate in Gegenwart eines Alkalimetallkatalysators equilibriert werden, wobei bei der Equilibrierung erhebliche Mengen an flüchtigen Siloxanen anfallen.

In EP 1 096 059 A1 ist zur Behandlung von Polyesterfasern eine Mischung aus linearen Aminoalkylsiloxanen (A) und (B) offenbart, wobei (A) Alkoxyendgruppen und (B) Hydroxyendgruppen aufweisen. Die Aminoalkylsiloxane (B) werden hergestellt, indem OH-endständige Polydimethylsiloxane mit Aminoalkylsilanhydrolysat in Gegenwart von KOH über einen langen Zeitraum von mehreren Stunden umgesetzt werden, bis der Katalysator durch Säure neutralisiert.wird. Durch die lange Reaktionszeit werden Aminoalkylpolysiloxane mit einem hohen Gehalt an flüchtigen Bestandteilen, insbesondere an cyclischen Siloxanen, wie Octamethylcyclotetrasiloxan ($D_4$), erhalten.

Das Dokument EP 1 580 215 A1 offenbart (s. Beispiel 6) eine Mischung zwischen OHendständiges PDMS und Aminoalkylmethoxysilan, um einen Aminoalkylpolysiloxan herzustellen. Der Gehalt an Octamethylcyclotetrasiloxan (D4) ist weniger als 0.3 Gew.-%. Auch ist das Produkt ein klares farbloses Öl.

Es bestand die Aufgabe, ein Verfahren zur Herstellung von Aminoalkylpolysiloxanen bereitzustellen, bei dem die Reaktionszeiten kurz sind, bei dem Aminoalkylpolysiloxane erhalten werden, die eine niedrige Restflüchtigkeit, insbesondere einen niedrigen Gehalt an cyclischen Siloxanen, wie Cyclooctamethyltetrasiloxan ($D_4$), aufweisen und die lagerstabil sind, und bei dem insbesondere lineare Aminoalkylpolysiloxane mit endständigen Silanolgruppen (Si-OH) erhalten werden.

Gegenstand der Erfindung ist ein Verfahren zur Herstellung von Aminoalkylpolysiloxanen durch

(i) Mischen von

(1) Aminoalkylsilanhydrolysat der allgemeinen Formel

$$(AR_aSiO_{(3-a)/2})_m(R^1O_{1/2})_p \qquad (I)$$

und

(2) Organopolysiloxan aus Einheiten der allgemeinen Formel

$$R_x(OR^1)_ySiO_{\frac{4-(x+y)}{2}} \qquad (II)$$

bis eine Dispersion erhalten wird,
wobei
R gleich oder verschieden ist und einen einwertigen, gegebenenfalls halogenierten Kohlenwasserstoffrest mit 1 bis 18 Kohlenstoffatomen bedeutet,
$R^1$ ein Wasserstoffatom oder einen Alkylrest mit 1 bis 4 Kohlenstoffatomen, der ein oder zwei separate Sauerstoffatome enthalten kann, bedeutet, vorzugsweise ein Wasserstoffatom ist,

A einen einwertigen SiC-gebundenen Kohlenwasserstoffrest, der 1 bis 4 separate basische Stickstoffatome enthält, bedeutet,

a 0 oder 1, vorzugsweise 1, ist,

m eine ganze Zahl von 2 bis 500, vorzugsweise von 2 bis 50, ist und

p eine ganze Zahl von mindestens 2 bedeutet, vorzugsweise eine ganze Zahl von 2 bis 10 ist,

x 0, 1, 2 oder 3 ist,

y 0 oder 1 ist,

mit der Maßgabe, dass durchschnittlich mindestens 10 Si-atome, vorzugsweise mindestens 20 Si-atome, pro Molekül im Organopolysiloxan (2) enthalten sind,

(ii) Reaktion von Aminoalkylsilanhydrolysat (1) und Organopolysiloxan (2) in der Dispersion in Gegenwart eines basischen Katalysators (3)

bis eine weitgehend klare Mischung erhalten wird, wobei eine Mischung als weitgehend klar bezeichnet wird, wenn sie einen Monitek-Trübungswert von < 3,7 ppm aufweist, wobei der Monitek-Trübungswert erhalten wird bei Messung des Trübungswertes mit dem OPTICAL ANALYZER der Fa. Monitec durch vergleichende Messung gegen eine Referenzsuspension von Kieselgur in Wasser, und

(iii) Stoppen der Reaktion durch Neutralisation des basischen Katalysators (3),

mit der Maßgabe, dass Aminoalkylpolysiloxane erhalten werden, die einen Gehalt an Octamethylcyclotetrasiloxan ($D_4$) von weniger als 0,3 Gew.-% aufweisen.

Vorzugsweise wird im Schritt (i) ein Organopolysiloxan (2) eingesetzt, dass durchschnittlich mindestens zwei $R^1O$-Reste pro Molekül enthält.

Es ist allgemein bekannter Stand der Technik, dass Equilibrierungen unter Spaltung und erneuter Bildung von Si-O-Si-Bindungen langsamer verlaufen als Kondensationsreaktionen von Siloxanolen. Überraschenderweise wurde aber gefunden, dass bei Umsetzung von Aminoalkylsilanhydrolysat (1) sogar in der Silanolform mit Organopolysiloxan (2) ebenfalls in der Silanolform, das Aminoalkylsiloxan in Form separierter Aminoalkylsilaneinheiten in das Organopolysiloxan (2) eingebaut ist, bevor nennenswerte Kondensation der Siloxanole einsetzt. Ebenso überraschend ist, dass diese schnelle Redistributionsreaktion nur sehr geringe Mengen an flüchtigen Cyclosiloxanen erzeugt.

Das erfindungsgemäße Verfahren hat den Vorteil, dass Aminoalkylpolysiloxane erhalten werden, die eine niedrige Restflüchtigkeit, d.h. einen niedrigen Gehalt von cyclischen Siloxanen, von vorzugsweise unter 1 Gew.-%, bevorzugt von unter 0,7 Gew.-% aufweisen.

Gegenüber häufig praktizierten Kondensationsverfahren von Aminoalkylpolysiloxanen mit Polydimethylsiloxandiolen hat das erfindungsgemäße Verfahren den Vorteil, dass die Produktviskositäten gegenüber den Edukten nur moderat erhöht sind. Der Viskositätsquotient von Produkt/Eduktgemisch ist meist unter 4 zu halten, während er bei Kondensationsverfahren meist über 10 liegt. Falls gewünscht ist dies zwar beim erfindungsgemäßen Verfahren durch Verlängerung der Reaktionszeit auch möglich, aus Gründen einfacher Handhabung sind jedoch meist niedrigere Produktviskositäten erwünscht. Kondensationsverfahren beinhalten zwangsläufig das Verbinden mehrerer Edukte (unter Bildung sehr kleiner Spaltprodukte), so dass daraus immer eine erhebliche Viskositätserhöhung resultiert.

In besonderer Weise eignet sich das vorliegende Verfahren zur Herstellung von Aminoalkylsiloxandiolen mit praktisch quantitativer SiOH-Stopperung der Kettenenden, was beim Einsatz von Aminoalkylsilanen kaum oder mit aufwändigen Folgeprozeduren zu erreichen ist. Aminoalkylpolysiloxane dieses Typs sind überraschend lagerstabil und werden zur Herstellung von Aminoalkylsiloxanhochpolymeren z. B. in Emulsion gebraucht, wie in WO 2006/015740 beschrieben.

In diesem Fall wird Aminoalkylsilanhydrolysat (1) mit $R^1O$-Terminierung eingesetzt, wobei $R^1$ gleich Wasserstoff ist. Der Anteil von $R^1$ in der Bedeutung von Wasserstoff ist dann vorzugsweise größer 90 Mol-%, bevorzugt größer 98 Mol-%, besonders bevorzugt etwa 100 Mol-%. Gleiches gilt dann auch für die Endgruppen des Organopolysiloxans (2).

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$ - und der $\beta$-Phenylethylrest.

Beispiele für halogenierte Reste R sind Halogenalkylreste, wie der 3,3,3-Trifluor-n-propylrest, der 2,2,2,2',2', 2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest besonders bevorzugt ist.

Beispiele für $R^1$ sind H-, $CH_3$-, $CH_3CH_2$-, $(CH_3)_2CH$-, $CH_3CH_2CH_2$-, $CH_3CH_2CH_2CH_2$-, $CH_3CH_2OCH_2CH_2$-,

$CH_3CH_2OCH_2-$ und $CH_3OCH_2CH_2-$ Reste.

Vorzugsweise ist A in Formel (I) ein Rest der Formel

$$-R^2- [NR^3-R^4-]_gNR^3_2.$$

wobei $R^2$ ein zweiwertiger linearer oder verzweigter Kohlenwasserstoffrest mit 1 bis 18 Kohlenstoffatomen bedeutet,
$R^3$ die Bedeutung von $R^1$ hat oder einen Acylrest bedeutet, vorzugsweise ein Wasserstoffatom ist,
$R^4$ ein zweiwertiger Kohlenwasserstoffrest mit 1 bis 6 Kohlenstoffatomen und
g 0, 1, 2, 3 oder 4, vorzugsweise 0 oder 1 ist.

Bevorzugte Beispiele für Reste A sind:

$H_2N(CH_2)_3-$
$H_2N(CH_2)_2NH(CH_2)_3-$
$H_2N(CH_2)_2NH(CH_2)CH (CH_3)CH_2-$
$(Cyclohexyl)NH(CH_2)_3-$
$CH_3NH(CH_2)_3-$
$(CH_3)_2N(CH_2)_3-$
$CH_3CH_2NH(CH_2)_3-$
$(CH_3CH_2)_2N(CH_2)_3-$
$CH_3NH(CH_2)_2NH(CH_2)_3-$
$(CH_3)_2N(CH_2)_2NH(CH_2)_3-$
$CH_3CH_2NH(CH_2)_2NH(CH_2)_3-$
$(CH_3CH_2)_2N(CH_2)_2NH(CH_2)_3-$

und deren teil- oder vollacetylierte Formen.

Besonders bevorzugte Beispiele für Reste A sind:

$H_2N(CH_2)_3-$
$H_2N(CH_2)_2NH(CH_2)_3-$
$(Cyclohexyl)NH(CH_2)_3-$
$(Acetyl) -NH (CH_2)_2NH(CH_2)_3-$
$(Acetyl) -NH (CH_2)_2N(Acetyl) (CH_2)_3-$

Bevorzugt werden die Aminoalkylsilanhydrolysate (1) aus Aminoalkylfunktionellen Dialkoxysilanen, wie Aminopropylmethyldimethoxysilan oder Aminoethylaminopropylmethyldimethoxysilan, durch Hydrolyse in Wasser hergestellt. Diese spezielle Stoffgruppe hat lineare Struktur mit bevorzugt 2 bis 50 Siloxyeinheiten. Aminoalkylsilanhydrolysat (1) kann grundsätzlich mit jedem Polymerisationsgrad eingesetzt werden. Aus Handhabungsgründen sind aber Viskositäten unter 10 000 mPa·s bei 25°C bevorzugt, insbesondere Hydrolysate mit Viskositäten unter 2000 mPa·s bei 25°C. Die Aminoalkylsilanhydrolysate (1) haben vorzugsweise Amingruppenkonzentrationen von meist 5 bis ca. 12 mEqu./g. Der Rest A kann prim., sec. oder/und tert. Amingruppen enthalten.

Bevorzugt werden daher als Aminoalkylsilanhydrolysate (1) solche der allgemeinen Formel

$$HO(ARSiO)_mH \qquad (III)$$

eingesetzt,
wobei R, A und m die oben dafür angegebene Bedeutung haben.

Bevorzugt werden als Organopolysiloxane (2) solche der allgemeinen Formel

$$HO(R_2SiO)_nH \qquad (IV)$$

eingesetzt,
wobei R die oben dafür angegebene Bedeutung hat und
n eine ganze Zahl von 20 bis 500 ist.

Üblicherweise sind Mischungen (1) und (2) nicht homogen, sondern selbst in der Wärme trübe Zweiphasengemische. Durch die Erzeugung möglichst kleiner Teilchen der dispergierten Phase wird die erzeugte Dispersion daran gehindert, in zwei Makrophasen zu zerfallen. Durch die damit einhergehende Erzeugung großer Grenzflächen zwischen dispergierter und kontinuierlicher Phase wird darüber hinaus eine maximale Reaktionsgeschwindigkeit sowie eine Kontrollierbarkeit/Reproduzierbarkeit der Reaktion sicher gestellt. Dazu müssen durchschnittliche Teilchengrößen von vorzugsweise unter 1 mm generiert werden. Bevorzugt hat die dispergierte Phase eine durchschnittliche Teilchengröße von unter 100 $\mu$m, besonders bevorzugt unter 10 $\mu$m, außerordentlich bevorzugt unter 1 $\mu$m. Bevorzugt sind die Dispersionen in einer Schichtdicke von mehr als 2 cm nicht mehr transparent. Nicht mehr transparent bedeutet hierbei, dass ein Barcode (Strichcode) nicht mehr erkennbar ist. Um diese Teilchengrößen zu erreichen, können verschiedene Methoden eingesetzt werden, um die dazu nötige Energie/Arbeit in das System einzutragen. Dies können konventionelle Rühr- und/oder Mischaggregate sein. Des Weiteren können Dispergieraggregate eingesetzt werden. Dafür kommen prinzipiell alle nach dem Stand der Technik bekannten Homogenisatoren in Frage, wie z. B. Hochgeschwindigkeitsrührwerke, Hochleistungsdispergiergeräte (z. B. solche erhältlich unter der Marke IKA Ultra-Turrax®), Dissolversysteme und andere Rotor-Stator-Homogenisatoren sowie Hochdruckhomogenisatoren, Schüttler, Vibrationsmischer, Ultraschallgeneratoren, Emulgierzentrifugen, Kolloidmühlen oder Zerstäuber. Die Homogenisierung kann entweder im Reaktionsraum erfolgen, indem das Dispergieraggregat in die Reaktionsmischung getaucht wird, oder außerhalb des Reaktionsraums, indem die Reaktionsmischung kontinuierlich im Kreislauf durch ein Dispergieraggregat geleitet wird. Zusätzlich zum Dispergieraggregat kann ein konventioneller Rührer für eine weitere Durchmischung sorgen.

Das Mischungsverhältnis (1) : (2) kann über einen sehr weiten Bereich schwanken und orientiert sich an der Amingruppendichte der Zielprodukte.

Bei dem erfindungsgemäßen Verfahren wird daher Organopolysiloxan (2) in Mengen von vorzugsweise 20 bis 500 Mol, bevorzugt 20 bis 200 Mol, je Mol Aminoalkylsilanhydrolysat (1) eingesetzt.

Bei diskontinuierlichen Rührwerksprozessen ist die Dosierreihenfolge unkritisch, wobei aber aus praktischen Gründen Aminoalkylsilanhydrolysat (1) bevorzugt auf das bereits eingelegte Organopolysiloxan (2) dosiert wird.

Die Reaktion (ii) zwischen (1) und (2) wird in Gegenwart von basischem Katalysator durchgeführt. Nachdem Herstellen der Dispersion aus (1) und (2) wird daher basischer Katalysator (3) zugegeben.

Zur Durchführung der Reaktion (ii) von (1) mit (2) in wirtschaftlich interessanten Zeiträumen wird ein basischer Katalysator (3) benötigt, der die Redistribution der Siloxygruppen stark beschleunigt. Prinzipiell sind alle bekannten basischen Katalysatoren einsetzbar, wie sie auch bisher zur Herstellung von Aminoalkylpolysiloxanen verwendet werden. Bevorzugt werden jedoch Alkalimetallhydroxide, Alkalimetallalkoholate oder Alkalimetallsiloxanolate.

Beispiele für Alkalimetallhydroxide sind Kaliumhydroxid und Natriumhydroxid.

Beispiele für Alkalimetallalkoholate sind Natriummethanolat und Natriumethanolat.

Beispiele für Alkalisiloxanolate sind Natriumsiloxanolate.

Die basischen Katalysatoren (3) werden bei dem erfindungsgemäßen Verfahren in einer Mengen von vorzugsweise ca. 1 bis 500 ppm, bevorzugt 40 bis 250 ppm, jeweils bezogen auf die Mischung aus (1) und (2), eingesetzt.

Die Reaktion zwischen den Komponenten (1) und (2) wird bevorzugt im Bereich 50°C bis 150°C, vorzugsweise von 70°C bis 120°C ausgeführt.

Das erfindungsgemäße Verfahren kann beim Druck der umgebenden Atmosphäre, also bei etwa 1020 hPa, oder bei höheren oder niedrigeren Drücken durchgeführt werden.

Die Reaktionszeit beträgt vorzugsweise 2 bis 60 Minuten.

Die Reaktionszeiten im Falle von Aminoalkylpolysiloxanen, die durch basisch katalysierte Equilibrierung bis ins vollständige Equilibrium erzeugt werden, liegen meist bei mehreren Stunden. Solche Prozesse werden üblicherweise nicht-kontinuierlich im Batch-Verfahren abgebildet, da z. B. lange Aufheiz- und Abkühlphasen (ebenfalls im Stundenbereich) des Rührwerks gegenüber der langen Reaktionszeit kaum ins Gewicht fallen. Die Lage ändert sich aber deutlich, wenn die Reaktionszeit deutlich niedriger ist als besagte Aufheiz- und Abkühlphasen. Im Falle des erfindungsgemäßen Verfahrens liegen die Reaktionszeiten üblicherweise im Bereich von wenigen Minuten bis ca. einer Stunde. Nicht zuletzt aufgrund dieser Schnelligkeit eignet sich das Verfahren besonders zur Durchführung kontinuierlicher Fahrweisen. Hierbei werden die Reaktanden und der Katalysator, die ggf. getrennt über Vorwärmer auf die gewünschte Temperatur gebracht werden, kontinuierlich in einen geheizten und ggf. mit Mischelementen ausgestatteten Reaktionsraum geführt, in dem die Reaktion unter Einstellung der gewünschten Verweilzeit stattfindet, bevor die Reaktionsprodukte in gleichem Maße kontinuierlich aus dem Reaktionsraum abgeführt werden und der Katalysator deaktiviert wird. Für diese Art von kontinuierlicher Herstellweise ist das erfindungsgemäße Verfahren auch deshalb gut geeignet, weil die Menge an flüchtigen Bestandteilen in der Reaktionsmischung mit vorzugsweise unter 1 Gew.-% sehr gering ist - Bereiche, in die man normalerweise nur durch nachgeschaltete destillative Verfahren gelangt. Dadurch kann in den meisten Fällen auf eine Vakuum-Fahrweise sowie Purge-Gas-Ströme verzichtet werden. Solche kontinuierlichen Verfahren können zum Beispiel in Loop-Reaktoren, Knetern, Extrudern, kontinuierlich betriebenen Batch-Reaktoren sowie Batch-Reaktor-Kaskaden, Strömungsrohren, Rohrreaktoren, Microreaktoren oder Kreiselpumpen, bzw. in beliebigen Kombinationen davon durchgeführt werden.

Bevorzugt wird die erfindungsgemäße Reaktion am Klarpunkt gestoppt, d.h. eine weitgehend klare Mischung ist erreicht, wenn sie einen Monitek-Trübungswert von ≤ 3,7 ppm aufweist. Die Messung des Trübungswertes erfolgt mit dem OPTICAL ANALYZER der Fa. Monitec durch vergleichende Messung gegen eine Referenzsuspension von Kieselgur in Wasser. Der Messwert wird angegeben in ppm Kieselgur.

Das Stoppen der Reaktion erfolgt indem der Katalysator bei Erreichen des Klarpunkts (homogenes Organopolysiloxan) deaktiviert wird. Prinzipiell kann dies auch später erfolgen, was aber außer dem Zeitverlust auch eine Erhöhung der Flüchtigkeit (und der Viskosität) zur Folge hat, was nicht bevorzugt ist. Es hat sich überraschenderweise gezeigt, dass die Redistribution der Siloxygruppen am Klarpunkt bereits so weit fortgeschritten ist, dass keine nennenswerten Mengen an benachbarten Aminoalkylsiloxygruppen, so wie sie im Hydrolysat (1) vorliegen, nachweisbar sind. Der Katalysator (3) kann mit allen Neutralisationsmitteln deaktiviert werden, die auch bisher für diese Zwecke eingesetzt werden.

Die Deaktivierung des basischen Katalysators kann durch die Zugabe von Neutralisationsmitteln erfolgen, die mit den basischen Katalysatoren Salze bilden. Solche Neutralisationsmittel können z. B. Carbonsäuren oder Mineralsäuren sein. Bevorzugt sind Carbonsäuren, wie Methansulfonsäure, Essigsäure, Propansäure sowie Hexadecan- und Octadecansäure.

Die Deaktivierung des basischen Katalysators kann jedoch erfolgen durch die Zugabe von Neutralisationsmitteln, die mit den basischen Katalysatoren Salze bilden, die in den erhaltenen Aminölen löslich sind und somit keinerlei Trübungen erzeugen. Beispiele für solche Neutralisationsmittel sind langkettige bei Raumtemperatur flüssige Carbonsäuren, wie n-Octansäure, 2-Ethylhexansäure, n-Nonansäure und Ölsäure, Hexadecan- oder Octadecansäure, Kohlensäureester wie Propylencarbonat, oder Carbonsäureanhydride wie Octenylbernsteinsäureanhydrid. Weitere Beispiele sind Triorganosilylphosphate, vorzugsweise Trimethylsilylphosphate, und Triorganophosphate, vorzugsweise Mischungen von Mono-, Di- und Triisotridecylphosphaten (erhältlich unter der Bezeichnung Hordaphos® MDIT bei der Fa. Clariant). Bevorzugt werden als Trimethylsilylphosphate dabei Zusammensetzungen bestehend im wesentlichen aus 0-50 Gew.-% Monosilylphosphat der Formel: $[(CH_3)_3SiO](HO)_2P=O$ 20-100 Gew.-% Disilylphosphat der Formel: $[(CH_3)_3SiO]_2(HO)P=O$ 0-70 Gew.-% Trisilylphosphat der Formel: $[(CH_3)_3SiO]_3P=O$ wobei die Gesamtmenge 100 Gew.-% beträgt, eingesetzt.

Die nötige Menge an Neutralisationsmitteln, richtet sich nach der eingesetzten Menge an basischen Katalysatoren (3) und beträgt vorzugsweise 0.05 bis 0.50 Ge.-%, bevorzugt 0.15 bis 0.30 Gew.-%, jeweils bezogen auf das Gesamtgewicht der Reaktionsmischung. Die Neutralisation kann dabei vor oder nach dem Abkühlen der Reaktionsmischung erfolgen.

Nach dem erfindungsgemäßen Verfahren werden als Aminoalkylpolysiloxane vorzugsweise solche aus Einheiten der allgemeinen Formel

$$A_zR_x(OR^1)_ySiO_{\frac{4-(x+y+z)}{2}} \qquad (V)$$

erhalten,

wobei R, A, x und y die oben dafür angegebene Bedeutung haben, z 0 oder 1 ist,

mit der Maßgabe, dass durchschnittlich mindestens zwei Reste A und mindestens zwei $R^1O$-Reste pro Molekül enthalten sind.

Bevorzugt werden bei dem erfindungsgemäßen Verfahren als Aminoalkylpolysiloxane solche der allgemeinen Formel

$$HO(ARSiO)_m(R_2SiO)_nH \qquad (VI)$$

erhalten,

wobei R, A, m und n die oben dafür angegebene Bedeutung haben.

Die erfindungsgemäßen Aminoalkylpolysiloxane haben bei 25°C vorzugsweise eine Viskosität von mindestens 100 mPa·s, bevorzugt 1000 - 500 000 mPa·s, besonders bevorzugt 5000 - 200 000 mPa·s.

Vorzugsweise enthalten sie 0,01 - 0,80, bevorzugt 0,03 - 0,60 mEqu. Aminbase pro g Aminoalkylpolysiloxane. Besonders bevorzugt ist der Bereich 0,05 - 0,40 mEqu./g.

Die nach dem erfindungsgemäßen Verfahren erhaltenen Aminoalkylpolysiloxane weisen eine Restflüchtigkeit von vorzugsweise weniger als 1 Gew.-%, bevorzugt weniger als 0,7 Gew.-%, besonders bevorzugt weniger als 0,5 Gew.-% auf. Die Restflüchtigkeit ist ein thermisch ermittelter Wert und wird dabei definiert als die Menge an flüchtigen Bestandteilen in Gew.-% beim Erhitzen einer Probenmenge von 5 g bei 120°C in einer Zeit von 60 min (120°C/5 g/60 min).

Ein großer Teil der flüchtigen Bestandteile sind cyclische Siloxane, wobei neben höheren Cyclen Octamethyltetrasiloxan ($D_4$) enthalten ist.

Die nach dem erfindungsgemäßen Verfahren erhaltenen Aminoalkylpolysiloxane weisen vorzugsweise einen Gehalt an Octamethyltetrasiloxan ($D_4$) von weniger als 0,3 Gew-%, bevorzugt von weniger als 0,2 Gew-% auf.

Beispiel 1:

400 g eines OH-terminierten Polydimethylsiloxans mit der Viskosität 1000 mm$^2$/s (25°C) werden mit 8,0 g eines ebenfalls OH-terminierten Hydrolysats von Aminopropylmethyldimethoxysilan mit einer $NH_2$-Konzentration von 8,5 mEqu./g und einer durchschnittlichen Kettenlänge von 22 Siloxyeinheiten turbolent vermischt, so dass eine stark opake Dispersion, die in einer Schichtdicke von mehr als 2 cm nicht mehr transparent ist, sodass ein Barcode (Strichcode) nicht mehr erkennbar ist, entsteht.

Unter Rühren mit einem Flügelrührer bei ca. 300 U/min. erwärmt man das Gemisch auf 100°C und startet die Reaktion der beiden Komponenten durch Zugabe von 40 mg KOH in Form einer 20%-igen Lösung in Ethanol. Die Dispersion wird nach 10 Minuten klar, und der Katalysator sofort mit 42 mg Essigsäure deaktiviert. Das durch Kaliumacetat schwach trübe Reaktionsprodukt wird nach Abkühlen klar filtriert. Es wird ein Aminöl mit einer Viskosität von 6700 $mm^2/s$ (25°C), einer Amindichte von 0,17 mEqu./g und einer Flüchtigkeit (5 g/1 h/ 120°C) von nur 0,2 Gew.-% erhalten.

Im hochauflösenden $^{29}Si$-NMR-Spektrum sind bei dieser sehr kurzen Reaktionszeit nur ca. 3 Mol-% Aminopropylsiloxyblockstrukturen des Hydrolysats bei -22,40 ppm erkennbar, wogegen der Hauptpeak der isolierten Aminopropylsiloxyeinheiten bei -22,53 ppm neu auftaucht. Damit ist die gute Separation der eingesetzten Aminoalkylbausteine zu einem Zustand bewiesen, wo nur minimale Mengen flüchtiger cyclischer Siloxane entstanden sind.

Es wird ein Aminoalkylsiloxan mit statistisch verteilten Dimethylsiloxan- und Aminopropylmethylsiloxaneinheiten und endständigen Silanolgruppen erhalten.

Vergleichsversuch 1: analog US 3,890,269 (= DE 2 339 761 A)

In nicht erfindungsgemäßer Art und Weise wird Beispiel 1 mit 400 g eines Gemisches aus Octamethylcyclotetrasiloxan und Decamethylcyclopentasiloxan statt eines OH-terminierten Polydimethylsiloxans ausgeführt. Unter sonst gleichen Bedingungen wird die zunächst erhaltene Dispersion 10 Minuten nach Katalyse mit KOH-Lösung bei 100 °C nicht klar. Das durch Essigsäure desaktivierte Siloxangemisch separiert sich in 2 Phasen. Die gemessene Flüchtigkeit (5 g/1h/120°C) beträgt 49 Gew.-%. Ein brauchbares Aminoalkylorganopolysiloxan ist auf diese Weise nicht zu erhalten. Die Abscheidung von als Edukt eingesetztem Aminoalkylsilanhydrolysat zeigt, dass dieses nur unzureichend mit den Cyclosiloxanen reagiert hat. Die nach Homogenisierung der Dispersion gemessene Viskosität von 3,2 $mm^2/s$ (25 °C) beweist außerdem einen völlig unzureichenden Polymeraufbau.

Vergleichsversuch 2: mit Aminoalkylsilan anstelle Aminoalkylsilanhydrolysat (1)

Das Beispiel 1 wird wiederholt mit der Maßgabe, dass 11 g Aminopropylmethyldimethoxysilan und nicht 8,0 g seines Hydrolysats eingesetzt werden. Der Gehalt an Aminoalkylgruppen ist mit 0,17 mEqu./g identisch. Nach gleicher Durchführungsweise erhält man ein Aminoalkylsiloxanprodukt mit 1780 $mm^2/s$ (25 °C), das eine Flüchtigkeit von 1,3 Gew.-% aufweist, was dem 6-fachen Wert des erfindungsgemäßen Beispiels 1 entspricht. Der Reaktionsfortschritt lässt sich hier nicht anhand eines Klarpunkts erkennen, da das Reaktionsgemisch von Anfang an klar ist. Ein optischer Indikator fehlt daher.

Vergleichsversuch 3: Bestimmung der Stabilität

Aus 400 g eines OH-terminierten Polydimethylsiloxans mit einem Polymerisationsgrad von 38 und 11 g Aminopropylmethyldimethoxysilan werden auf konventionelle Weise mit 400 ppm Benzyltrimethylammoniumhydroxyd (40 %-ige Lösung in MeOH) in 5 Stunden bei 100°C und anschließendem Ausheizen bei 150°C 380 g eines Aminopropylmethyl/dimethylpolysiloxans mit einer Viskosität von 3850 $mm^2/s$ (25 °C) hergestellt. Die Kernresonanzanalytik zeigt ein MeO/OH-Verhältnis der Kettenenden von 42/58.

Jeweils 50 g dieses Polymers und des Aminoalkylsiloxans aus Beispiel 1 werden bei 70°C 7 Tage lang einem beschleunigten Alterungsprozess unterzogen. Die Ergebnisse sind in Tabelle 1 zusammengefasst.

Tabelle 1:

|  | Beispiel 1 | Vergleichsversuch 3 |
|---|---|---|
| Viskosität nach Herstellung [$mm^2/s$] bei 25°C | 6700 | 3850 |
| Viskosität nach Temperung [$mm^2/s$] bei 25°C | 11300 | 14400 |
| Veränderung in % | + 69 | + 374 |

Das konventionell hergestellte Aminoalkylsiloxan zeigt im Schnelltest einen mehr als 5-mal so großen Viskositätsanstieg im Vergleich zum Produkt aus Beispiel 1. Es ist damit weit weniger stabil als ein erfindungsgemäß hergestelltes Aminoalkylsiloxan.

Beispiel 2:

400 g eines OH-terminierten Polydimethylsiloxans mit einer Viskosität von 5900 mm$^2$/s (25°C) werden mit 5 g des Aminoalkylsilanhydrolysats aus Beispiel 1 vermischt, so dass eine stark opake Dispersion entsteht, und wie dort gerührt auf 90°C erwärmt. Nach Zugabe von 100 mg einer 20 %-igen Lösung von KOH in Ethanol wird die stark trübe Dispersion nach 21 Minuten klar. Der Katalysator wird kurz darauf, wie in Beispiel 1 beschrieben, deaktiviert, das schwach trübe Aminöl klar filtriert. Bei einem Amingehalt von 0,10 mEqu./g hat das Produkt eine Flüchtigkeit von 0,3 Gew.-% und eine Viskosität von 19100 mm$^2$/s (25°C) .

Eine Probe dieses Produkts wird 7 Tage bei 70°C getempert, um die Neigung zur Eigenkondensation der Siloxanolgruppen zu prüfen. Die Temperung verursacht einen Viskositätsanstieg auf 30800 mm$^2$/s (25°C), gleichbedeutend mit einer durchschnittlichen Kettenverlängerung um nur ca. 15 %.

Das so erhaltene Aminoalkylsiloxan mit statistisch verteilten Dimethylsiloxan- und Aminopropylmethylsiloxaneinheiten und endständigen Silanolgruppen ist demnach lagerstabil.

Beispiel 3:

Um die Durchführbarkeit des Verfahrens bei noch milderen Bedingungen zu prüfen, wird Beispiel 2 bei 60°C wiederholt, wobei aber die KOH-Menge verdoppelt wird. Das Reaktionsgemisch braucht bis zum Erreichen des Klarpunkts 54 Minuten, worauf der Katalysator deaktiviert wird (analog Beispiel 2). Bei natürlich gleichem Amingehalt beträgt die Flüchtigkeit wieder 0,3 Gew.-%, die Viskosität 18700 mm$^2$/s (25 °C). Im $^{29}$Si-NMR sind bei -22,40 ppm keine Blockstrukturen mehr nachweisbar, deren Redistribution daher selbst bei milden 60°C glatt zu erreichen ist, lange bevor der Status eines Equilibriums erreicht ist, was an der niedrigen Flüchtigkeit deutlich sichtbar ist.

Beispiel 4:

400 g eines methylterminierten Polydimethylsiloxans mit einer Viskosität von 2000 mm$^2$/s (25°C) werden mit 10,0 g eines OH-terminierten Hydrolysats von Aminoethylaminopropylmethyldimethoxysilan mit 2460 mm$^2$/s (25°C) gut vermischt, so dass eine stark opake Dispersion entsteht, und unter Rühren (300 U/min.) auf 100°C erwärmt. Nach Zugabe von 60 mg KOH gelöst in Ethanol wird die zunächst sehr trübe Mischung nach 9 Minuten klar. Der Katalysator wird daraufhin mit 85 mg Essigsäure deaktiviert. Nach Abkühlen filtriert man Kaliumacetat ab und erhält ein klares Öl mit einer Viskosität von 1100 mm$^2$/s (25°C), einer Amindichte von 0,25 mEqu./g und nur 0,3 Gew.-% Flüchtigkeit (5 g/ 1 h/120 °C).

Beispiel 5:

Beispiel 4 wird mit 400 g eines niedrig viskosen OH-terminierten Polydimethylsiloxans mit ca. 40 Siloxyeinheiten statt des hoch viskosen Siliconöls wiederholt. Zur Katalyse werden außerdem 20 mg Natriummethylat gelöst in Methanol eingesetzt. Das klare Reaktionsprodukt wird nach 47 Minuten mit 0,24 g Hordaphos MDIT neutralisiert. Der Ansatz erreicht eine Viskosität von 140 mm$^2$/s (25 °C) bei einer Flüchtigkeit von 0,7 Gew.-% und einer Aminzahl von 0,26 (mEqu./g).

Beispiel 6:

100 g des in Beispiel 5 eingesetzten OH-terminierten Polydimethylsiloxans und 300 g eines weiteren OH-terminierten Polydimethylsiloxans mit 560 mm$^2$/s (25 °C) wird mit 10 g des gleichen Aminoalkylsilanhydrolysats (aus Beispiel 4) vermischt, so dass eine stark opake Dispersion entsteht, und unter Rühren auf 85°C erwärmt. Die Zugabe der gleichen Menge Natriummethylat (Beispiel 5) liefert nach 64 Minuten ein klares Reaktionsgemisch, welches umgehend mit 0,24 g Hordaphos MDIT neutralisiert wird. Das erhaltene Aminöl hat bei 0,8 Gew.-% Flüchtigkeit und einer Aminzahl von 0,26 (mEqu./g) jetzt eine Viskosität von 790 mm$^2$/s (25°C).

Beispiel 7:

98,79 Vol.-% eines OH-terminierten Polydimethylsiloxans mit einer Viskosität von 5900 mm$^2$/s (25°C) und 1,18 Vol.-% des Aminoalkylsilanhydrolysats aus Beispiel 1 wurden in einem Rohrreaktor kontinuierlich zu einer opaken Dispersion vermischt und unter Zusatz von 0,02 Vol.-% Natriummethylat gelöst in Methanol (30 %) in dem Rohrreaktor (Innendurchmesser 80 mm, Höhe 500 mm, Volumen ca. 2,5 L) bei 80°C Reaktorinnentemperatur kontinuierlich umgesetzt, wobei die Reaktionsmischung kurz vor Erreichen des Austritts aus dem Reaktionsraum klar wurde. Die Deaktivierung des Katalysators erfolgte mit 0,01 Vol.-% Essigsäure.

Produktaustritt, Produktabkühlung und kontinuierliche Katalysatordeaktivierung erfolgten nach einer durchschnittlichen Verweilzeit von 25 min. Nach einer Laufzeit des Reaktors von 6 h wurde dieser abgestellt und der Produktauffangbehälter entleert. Man erhielt ein farbloses Öl mit einer kinematischen Viskosität von 13300 mm$^2$/s (25°C), einer Flüchtigkeit (150°C/5 g/60 min) von 0,20 Gew.-% und einer Aminzahl von 0,10 (mEqu./g). Im $^{29}$Si-NMR sind bei -22,40 ppm keine Blockstrukturen mehr nachweisbar.

Beispiel 8: Bestimmung des Gehalts an flüchtigen Octamethylcyclotetrasiloxan (D$_4$):

Als aussagekräftiger Parameter zur Einschätzung der unerwünschten Flüchtigkeit eines Siloxanprodukts (Gehalt an thermisch entfernbaren Stoffen aus einem polymeren Produkt) lässt sich der spektrometrisch feststellbare Gehalt an Octamethylcyclotetrasiloxan (D$_4$) heranziehen. Eine geeignete Bezugsgröße ist der Quotient aus dem Integral für D$_4$ bei -19,3 ppm im $^{29}$Si-NMR zum Gesamtintegral aller Dialkylsiloxyeinheiten (Gesamt-D) im Bereich von -10 bis -25 ppm. Da D$_4$ nur einen Teil der flüchtigen Bestandteile im Produkt darstellt, liegt dieser Prozentsatz in der Regel auch niedriger als der thermisch ermittelte Wert der Restflüchtigkeit.

Für die Aminoalkylpolysiloxane der Beispiele 1 bis 6 (B 1 - B 6) und der Vergleichsversuche 1 und 2 (V 1 u. V 2) sind die Ergebnisse in Tabelle 2 zusammengefasst.

Tabelle 2:

|  | B 1 | B 2 | B 3 | B 4 | B 5 | B 6 | V 1 | V 2 |
|---|---|---|---|---|---|---|---|---|
| D4 / Gesamt-D in Gew.-% | 0,1 | 0,1 | 0,1 | 0,1 | 0,3 | 0,3 | 27 | 0,5 |

Auch der niedrige Gehalt an flüchtigem D$_4$ in den nicht ausgeheizten Aminoalkylpolysiloxanen zeigt die Überlegenheit des erfindungsgemäßen Verfahrens.

**Patentansprüche**

1.    Verfahren zur Herstellung von Aminoalkylpolysiloxanen durch

   (i) Mischen von

      (1) Aminoalkylsilanhydrolysat der allgemeinen Formel $(AR_aSiO_{(3-a)/2})_m(R^1O_{1/2})_p$ (I) und
      (2) lineares und verzweigtes Organopolysiloxan aus Einheiten der allgemeinen Formel

$$R_x(OR^1)_ySiO_{\frac{4-(x+y)}{2}} \qquad (II)$$

      bis eine Dispersion erhalten wird,
      wobei
      R gleich oder verschieden ist und einen einwertigen, gegebenenfalls halogenierten Kohlenwasserstoffrest mit 1 bis 18 Kohlenstoffatomen bedeutet,
      $R^1$ ein Wasserstoffatom oder einen Alkylrest mit 1 bis 4 Kohlenstoffatomen, der ein oder zwei separate Sauerstoffatome enthalten kann, bedeutet, vorzugsweise ein Wasserstoffatom ist,
      A einen einwertigen SiC-gebundenen Kohlenwasserstoffrest, der 1 bis 4 separate basische Stickstoffatome enthält, bedeutet,
      a 0 oder 1 ist,
      m eine ganze Zahl von 2 bis 500 und
      p eine ganze Zahl von mindestens 2 bedeutet,
      x 0, 1, 2 oder 3 ist,
      y 0 oder 1 ist,
      mit der Maßgabe, dass durchschnittlich mindestens 10 Si-atome pro Molekül im Organopolysiloxan (2) enthalten sind,

   (ii) Reaktion von Aminoalkylsilanhydrolysat (1) und Organopolysiloxan (2) in der Dispersion in Gegenwart eines basischen Katalysators (3)

bis eine weitgehend klare Mischung erhalten wird, wobei eine Mischung als weitgehend klar bezeichnet wird, wenn sie einen Monitek-Trübungswert von < 3,7 ppm aufweist, wobei der Monitek-Trübungswert erhalten wird bei Messung des Trübungswertes mit dem OPTICAL ANALYZER der Fa. Monitec durch vergleichende Messung gegen eine Referenzsuspension von Kieselgur in Wasser, und

(iii) Stoppen der Reaktion durch Neutralisation des basischen Katalysators (3) ,

mit der Maßgabe, dass Aminoalkylpolysiloxane erhalten werden, die einen Gehalt an Octamethylcyclotetrasiloxan ($D_4$) von weniger als 0,3 Gew.-% aufweisen.

2.  Verfahren nach Anspruch 1, **dadurch gekennzeichnet, dass** als Aminoalkylsilanhydrolysat (1) solches der allgemeinen Formel

$$HO(ARSiO)_mH \qquad (III)$$

eingesetzt wird,
wobei R, A und m die in Anspruch 1 dafür angegebene Bedeutung haben.

3.  Verfahren nach Anspruch 1 oder 2, **dadurch gekennzeichnet, dass** als Organopolysiloxan (2) solches der allgemeinen Formel

$$HO(R_2SiO)_nH \qquad (IV)$$

eingesetzt wird,
wobei R die in Anspruch 1 dafür angegebene Bedeutung hat und
n eine ganze Zahl von 20 bis 500 ist.

4.  Verfahren nach Anspruch 1, 2 oder 3, **dadurch gekennzeichnet, dass** als basischer Katalysator (3) solcher ausgewählt aus der Gruppe von Alkalimetallhydroxiden, Alkalimetallalkoholaten und Alkalimetallsiloxanolaten eingesetzt wird.

5.  Verfahren nach einem der Ansprüche 1 bis 4, **dadurch gekennzeichnet, dass** als Neutralisationsmittel Carbonsäuren, Triorganosilylphosphate und Triorganophosphate eingesetzt werden.

6.  Verfahren nach einem der Ansprüche 1 bis 5, **dadurch gekennzeichnet, dass**

(ii) die Reaktion bei einer Temperatur von 50 bis 150°C und einer Reaktionszeit von 2 bis 60 Minuten durchgeführt wird.

7.  Verfahren nach einem der Ansprüche 1 bis 6, **dadurch gekennzeichnet, dass** das Verfahren kontinuierlich durchgeführt wird.

8.  Verfahren nach einem der Ansprüche 1 bis 7, **dadurch gekennzeichnet, dass** als Aminoalkylpolysiloxane solche der allgemeinen Formel

$$HO(ARSiO)_m(R_2SiO)_nH \qquad (VI)$$

erhalten werden,
wobei R, A und m die in Anspruch 1 und dafür angegebene Bedeutung haben und
n die in Anspruch 3 dafür angegebene Bedeutung hat.

9.  Aminoalkylpolysiloxane der allgemeinen Formel

$$HO(ARSiO)_m(R_2SiO)_nH \qquad (VI)$$

wobei R, A und m die in Anspruch 1 und dafür angegebene Bedeutung haben und
n die in Anspruch 3 dafür angegebene Bedeutung hat, mit der Maßgabe, dass die Aminoalkylpolysiloxane einen Gehalt an Octamethylcyclotetrasiloxan ($D_4$) von weniger als 0,3 Gew-% aufweisen.

**Claims**

1. Process for preparing aminoalkylpolysiloxanes by

   (i) mixing

      (1) aminoalkylsilane hydrolysate of the general formula $(AR_aSiO_{(3-a)/2})_m(R^1O_{1/2})_p$ (I) and
      (2) linear and branched organopolysiloxane composed of units of the general formula

$$R_x(OR^1)_ySiO_{\frac{4-(x+y)}{2}} \quad (II)$$

      until a dispersion is obtained where
      R is the same or different and is a monovalent, optionally halogenated hydrocarbon radical having from 1 to 18 carbon atoms,
      $R^1$ is a hydrogen atom or an alkyl radical which has from 1 to 4 carbon atoms and may contain one or two separate oxygen atoms, and is preferably a hydrogen atom,
      A is a monovalent SiC-bonded hydrocarbon radical which contains from 1 to 4 separate basic nitrogen atoms,
      a is 0 or 1,
      m is an integer from 2 to 500 and
      p is an integer of at least 2,
      x is 0, 1, 2 or 3,
      y is 0 or 1,
      with the proviso that an average of at least 10 silicon atoms per molecule are present in the organopolysiloxane (2),

   (ii) reacting aminoalkylsilane hydrolysate (1) and organopolysiloxane (2) in the dispersion in the presence of a basic catalyst (3) until a substantially clear mixture is obtained,
   a mixture being described as substantially clear when it has a Monitek turbidity value of <3.7 ppm, said Monitek turbidity being obtained when the turbidity value is measured with the Monitek optical analyzer by comparative measurement against a reference suspension of kieselguhr in water, and
   (iii) stopping the reaction by neutralizing the basic catalyst (3), with the proviso that the aminoalkylpolysiloxanes obtained have a content of octamethylcyclotetrasiloxane ($D_4$) of less than 0.3% by weight.

2. Process according to Claim 1, **characterized in that** the aminoalkylsilane hydrolysate (1) used is one of the general formula

   $$HO(ARSiO)_mH \quad (III)$$

   where R, A and m are each as defined in Claim 1.

3. Process according to Claim 1 or 2, **characterized in that** the organopolysiloxane (2) used is one of the general formula

   $$HO(R_2SiO)_nH \quad (IV)$$

   where R is as defined in Claim 1 and
   n is an integer from 20 to 500.

4. Process according to Claim 1, 2 or 3, **characterized in that** the basic catalyst (3) used is one selected from the group of alkali metal hydroxides, alkali metal alkoxides and alkali metal siloxides.

5. Process according to any one of Claims 1 to 4, **characterized in that** the neutralizing agents used are carboxylic acids, triorganosilyl phosphates and triorganophosphates.

6. Process according to any one of Claims 1 to 5, **characterized in that**

(ii) the reaction is performed at a temperature of from 50 to 150°C and for a reaction time of from 2 to 60 minutes.

7. Process according to any one of Claims 1 to 6, **characterized in that** it is performed continuously.

8. Process according to any one of Claims 1 to 7, **characterized in that** the aminoalkylpolysiloxanes obtained are those of the general formula

$$HO(ARSiO)_m(R_2SiO)_nH \qquad (VI)$$

where R, A and m are each as defined in Claim 1 and n is as defined in claim 3.

9. Aminoalkylpolysiloxanes of the general formula

$$HO(ARSiO)_m(R_2SiO)_nH \qquad (VI)$$

where R, A and m are each as defined in Claim 1 and n is as defined in Claim 3,
with the proviso that the aminoalkylpolysiloxanes have a content of octamethylcyclotetrasiloxane ($D_4$) of less than 0.3% by weight.

**Revendications**

1. Procédé pour la préparation d'aminoalkylpolysiloxanes par

(i) mélange de

(1) un hydrolysat d'aminoalkylsilane de formule générale

$$(AR_aSiO_{(3-a)/2})_m(R^1O_{1/2})_p \qquad (I)$$

et
(2) un organopolysiloxane linéaire et ramifié à base de motifs de formule générale

$$R_x(OR^1)_y SiO_{\frac{4-(x+y)}{2}} \qquad (II)$$

jusqu'à l'obtention d'une dispersion,
R étant le même ou différent et représentant un radical hydrocarboné monovalent éventuellement halogéné, ayant de 1 à 18 atomes de carbone,
$R^1$ représentant un atome d'hydrogène ou un radical alkyle ayant de 1 à 4 atomes de carbone, qui peut contenir un ou deux atomes d'oxygène non contigus, de préférence étant un atome d'hydrogène,
A représentant un radical hydrocarboné monovalent lié par une liaison SiC, qui contient de 1 à 4 atomes d'azote basiques non contigus,
a étant 0 ou 1,
m représentant un nombre entier valant de 2 à 500 et
p représentant un nombre entier valant au moins 2,
x étant 0, 1, 2 ou 3,
y étant 0 ou 1,
étant entendu qu'en moyenne au moins 10 atomes de silicium sont contenus par molécule dans l'organopolysiloxane (2),

(ii) réaction de l'hydrolysat d'aminoalkylsilane (1) et de l'organopolysiloxane (2) dans la dispersion en présence d'un catalyseur basique (3) jusqu'à l'obtention d'un mélange essentiellement limpide, un mélange étant qualifié d'essentiellement limpide lorsqu'il présente un indice de trouble Monitek de < 3,7 ppm, l'indice de trouble Monitek étant obtenu à partir de la mesure de l'indice de trouble à l'aide de l'OPTICAL ANALYZER de la Société Monitek par mesure comparative par rapport à une suspension de référence de kieselguhr dans de l'eau, et
(iii) arrêt de la réaction par neutralisation du catalyseur basique (3),

étant entendu qu'on obtient des aminoalkylpolysiloxanes qui présentent une teneur en octaméthylcyclotétrasiloxane ($D_4$) de moins de 0,3 % en poids.

**2.** Procédé selon la revendication 1, **caractérisé en ce qu'**on utilise comme hydrolysat d'aminoalkylsilane (1) celui de formule générale

$$HO(ARSiO)_mH \qquad (III)$$

dans laquelle R, A et m ont les significations indiquées pour ces symboles dans la revendication 1.

**3.** Procédé selon la revendication 1 ou 2, **caractérisé en ce qu'**on utilise comme organopolysiloxane (2) celui de formule générale

$$HO(R_2SiO)_nH \qquad (IV)$$

dans laquelle R a la signification indiquée pour ce symbole dans la revendication 1 et
n est un nombre entier valant de 20 à 500.

**4.** Procédé selon la revendication 1, 2 ou 3, **caractérisé en ce qu'**on utilise comme catalyseur basique (3) un tel catalyseur choisi dans le groupe des hydroxydes de métaux alcalins, des alcoolates de métaux alcalins et des siloxanolates de métaux alcalins.

**5.** Procédé selon l'une quelconque des revendications 1 à 4, **caractérisé en ce qu'**on utilise comme agent de neutralisation des acides carboxyliques, des phosphates de triorganosilyle et des triorganophosphates.

**6.** Procédé selon l'une quelconque des revendications 1 à 5, **caractérisé en ce que** ii) la réaction est effectuée à une température de 50 à 150 °C et pendant un temps de réaction de 2 à 60 minutes.

**7.** Procédé selon l'une quelconque des revendications 1 à 6, **caractérisé en ce que** le procédé est effectué en continu.

**8.** Procédé selon l'une quelconque des revendications 1 à 7, **caractérisé en ce qu'**on obtient comme aminoalkylpolysiloxanes ceux de formule générale

$$HO(ARSiO)_m(R_2SiO)_nH \qquad (VI)$$

dans laquelle R, A et m ont les significations indiquées pour ces symboles dans la revendication 1 et n a la signification indiquée pour ce symbole dans la revendication 3.

**9.** Aminoalkylpolysiloxanes de formule générale

$$HO(ARSiO)_m(R_2SiO)_nH \qquad (VI)$$

dans laquelle R, A et m ont les significations indiquées pour ces symboles dans la revendication 1 et n a la signification indiquée pour ce symbole dans la revendication 3,
étant entendu que les aminoalkylpolysiloxanes présentent une teneur en octaméthylcyclotétrasiloxane ($D_4$) de moins de 0,3 % en poids.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 382366 A
- US 3890269 A
- DE 2339761 A
- EP 1096059 A1
- EP 1580215 A1
- WO 2006015740 A